# EUROPEAN PATENT SPECIFICATION

(11) **EP 1 172 031 B1**
(45) Date of publication and mention of the grant of the patent: **01.09.2004**
(21) Application number: 01202234.9
(22) Date of filing: 11.06.2001
(51) Int. Cl.: A01J 5/017

(54) **A construction for automatically milking animals**
Konstruktion zum automatischen Melken von Tieren
Construction pour la traite automatique d'animaux

(30) Priority: 10.07.2000 NL 1015672
(43) Date of publication of application: 16.01.2002
(73) Proprietor: Lely Enterprises AG, 6300 ZUG (CH)
(72) Inventor: van der Lely, Alexander, 3065 NA Rotterdam (NL); van den Berg, Karel, 2971 BR Bleskensgraaf (NL); Fransen, Renatus Ignatius Josephus, 3155 ZD Vlaardingen (NL)
(74) Representative: Corten, Maurice Jean F.M.

(56) References cited:
- EP-A- 0 962 130
- US-A- 4 685 422
- US-A- 5 967 081
- US-A- 6 041 736

## Description

The invention relates to a construction for automatically milking animals according to the preamble of claim 1.

Such a construction is known. With the known constructions there is often used a controllable robot arm for positioning and/or connecting the teat cups. Such a robot arm comprises a first control element, at the end of which there is provided a further control element, while at the end of the further control element there may be provided another further control element. This has inter alia the disadvantage that an error in the control of the first control element affects the control of the further control elements. Errors in control accumulate and reinforce each other.

The invention aims at improving such a construction. According to the invention this is achieved by the measures described in the characterizing part of claim 1. The at least three control cylinders each have one side fastened to the milk box, so that an accurate and reliable control is achieved.

The invention will now be explained in further detail with reference to the accompanying figures.
Figure 1 shows schematically a perspective view of a construction according to the invention in a first position, and
Figure 2 shows schematically the construction of Figure 1 in a further position.

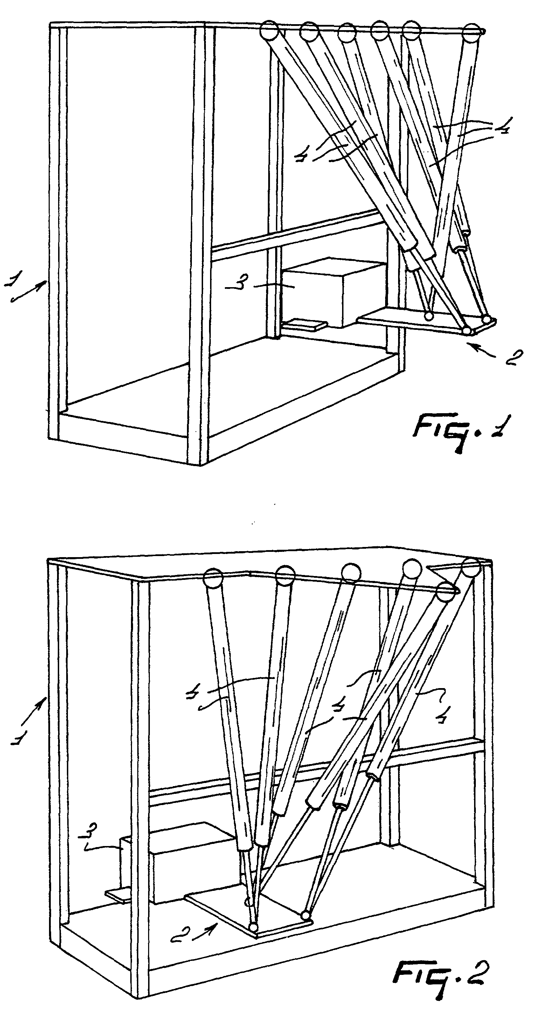

Figure 1 shows schematically a construction according to the invention in a first position. The construction for automatically milking animals comprises a milk box 1 with a milking robot 2 known per se, which is provided with teat cups and with means for connecting the teat cups to the teats of a (non-shown) animal to be milked. The teat cups are disposed on a schematically shown carrier element 3 that is movable in three dimensions by means of at least three control cylinders 4, each of which having one end connected with the milk box 1.

There may further be provided means for spatial orientation of the carrier element 3. Said means may comprise at least one further control cylinder 4 and/or at least one further control element, such as e.g. a stepper motor.

In the preferred embodiment shown the carrier element 3 is movable in three dimensions and capable of being orientated by means of six control cylinders 4, each of which having one end connected with the milk box 1. The carrier element 3 has substantially three contact points (not being in alignment with each other) with the control cylinders 4, each contact point being connected with two control cylinders 4. The control cylinders 4 are each fastened to the milk box 1 by means of a ball joint. The control cylinders 4 are also fastened in pairs to the carrier element 3 by means of a ball joint. The control cylinders 4 are preferably suitable for moving the carrier element 3 in such a manner that it remains substantially parallel to the floor of the milk box 1.

A part of the carrier element 3, on which the teat cups are disposed, may be designed movably relative to a further part of the carrier element 3, to which the control cylinders 4 are fastened. For that purpose the carrier element 3 may be provided with a rotatable and/or a shiftable and/or a pivotable platform for the teat cups. For the purpose of connecting the teat cups to the teats of the animal to be milked, the carrier element 3 may also be provided with a lifting device for the teat cups. The means for connecting the teat cups are preferably substantially disposed on the carrier element.

## Claims

1. A construction for automatically milking animals, said construction comprising a milk box (1) with a milking robot (2), which is provided with teat cups and with means for connecting the teat cups to the teats of an animal to be milked, **characterized in that** the teat cups are disposed on a carrier element (3) that is movable in three dimensions by means of at least three control cylinders (4), each of which having one end connected with the milk box (1).

2. A construction as claimed in claim 1, **characterized in that** the at least three control cylinders (4) are not disposed in one plane.

3. A construction as claimed in claim 1 or 2, **characterized in that** there are provided means for spatial orientation of the carrier element (3).

4. A construction as claimed in claim 3, **characterized in that** the means comprise at least one further control cylinder (4) and/or at least one further control element, such as e.g. a stepper motor.

5. A construction as claimed in any one of claims 1 to 4, **characterized in that** the carrier element (3) is movable in three dimensions and is capable of being orientated by means of six control cylinders (4), each of which having one end connected with the milk box (1).

6. A construction as claimed in claim 5, **characterized in that** the carrier element (3) has substantially three contact points, not being in alignment with each other, with the control cylinders (4), each contact point being connected with two control cylinders (4).

7. A construction as claimed in any one of claims 1 to 6, **characterized in that** each of the control cylinders (4) is fastened to the milk box (1) by means of a ball joint.

8. A construction as claimed in any one of claims 1 to 7, **characterized in that** the control cylinders (4) are fastened each or in pairs to the carrier element (3) by means of a ball joint.

9. A construction as claimed in any one of claims 1 to 8, **characterized in that** the control cylinders (4) are suitable for moving the carrier element (3) in such a manner that it remains substantially parallel to the floor of the milk box (1).

10. A construction as claimed in any one of claims 1 to 9, **characterized in that** a part of the carrier element (3), on which the teat cups are disposed, is movably designed relative to a further part of the carrier element (3), to which the control cylinders (4) are fastened.

11. A construction as claimed in claim 10, **characterized in that** the carrier element (3) is provided with a rotatable and/or a shiftable and/or a pivotable platform for the teat cups.

12. A construction as claimed in any one of claims 1 to 11, **characterized in that** the carrier element (3) is provided with a lifting device for the teat cups.

13. A construction as claimed in any one of claims 1 to 12, **characterized in that** the means for connecting the teat cups are substantially disposed on the carrier element (3).

## Patentansprüche

1. Vorrichtung zum automatischen Melken von Tieren, wobei die Vorrichtung eine Melkbox (1) mit einem Melkroboter (2) umfaßt, der mit Zitzenbechern und Vorrichtungen zum Anschließen der Zitzenbecher an die Zitzen eines zu melkenden Tieres versehen ist,
**dadurch gekennzeichnet, daß** die Zitzenbecher auf einem Trägerelement (3) angeordnet sind, das mit Hilfe von mindestens drei Steuerzylindern (4), von denen jeder mit einem Ende an der Melkbox (1) befestigt ist, in drei Dimensionen bewegbar ist.

2. Vorrichtung nach Anspruch 1,
**dadurch gekennzeichnet, daß** die mindestens drei Steuerzylinder (4) nicht in einer Ebene angeordnet sind.

3. Vorrichtung nach Anspruch 1 oder 2,
**dadurch gekennzeichnet, daß** Vorrichtungen zur räumlichen Ausrichtung des Trägerelements (3) vorhanden sind.

4. Vorrichtung nach Anspruch 3,
**dadurch gekennzeichnet, daß** die Vorrichtungen mindestens einen weiteren Steuerzylinder (4) und/oder mindestens ein weiteres Steuerelement, wie z. B. einen Schrittmotor, umfassen.

5. Vorrichtung nach einem der Ansprüche 1 bis 4,
**dadurch gekennzeichnet, daß** das Trägerelement (3) in drei Dimensionen bewegbar ist und mit Hilfe von sechs Steuerzylindern (4) ausgerichtet werden kann, von denen jeder mit einem Ende an der Melkbox (1) befestigt ist.

6. Vorrichtung nach Anspruch 5,
**dadurch gekennzeichnet, daß** das Trägerelement (3) im wesentlichen drei nicht miteinander fluchtende Kontaktpunkte mit den Steuerzylindern (4) aufweist, wobei jeder Kontaktpunkt mit zwei Steuerzylindern (4) verbunden ist.

7. Vorrichtung nach einem der Ansprüche 1 bis 6,
**dadurch gekennzeichnet, daß** jeder der Steuerzylinder (4) mittels eines Kugelgelenks an der Melkbox (1) befestigt ist.

8. Vorrichtung nach einem der Ansprüche 1 bis 7,
**dadurch gekennzeichnet, daß** die Steuerzylinder (4) einzeln oder paarweise mittels eines Kugelgelenks an dem Trägerelement (3) befestigt sind.

9. Vorrichtung nach einem der Ansprüche 1 bis 8,
**dadurch gekennzeichnet, daß** die Steuerzylinder (4) geeignet sind, das Trägerelement (3) in der Weise zu bewegen, daß es im wesentlichen parallel zum Boden der Melkbox (1) ausgerichtet bleibt.

10. Vorrichtung nach einem der Ansprüche 1 bis 9,
**dadurch gekennzeichnet, daß** ein Teil des Trägerelements (3), an dem die Zitzenbecher angeordnet sind, relativ zu einem weiteren Teil des Trägerelements (3), an dem die Steuerzylinder (4) befestigt sind, bewegbar ausgeführt ist.

11. Vorrichtung nach Anspruch 10,
**dadurch gekennzeichnet, daß** das Trägerelement (3) mit einer drehbaren und/oder einer verschiebbaren und/oder einer schwenkbaren Plattform für die Zitzenbecher versehen ist.

12. Vorrichtung nach einem der Ansprüche 1 bis 11,
**dadurch gekennzeichnet, daß** das Trägerelement (3) mit einer Hebevorrichtung für die Zitzenbecher versehen ist.

13. Vorrichtung nach einem der Ansprüche 1 bis 12,
**dadurch gekennzeichnet, daß** die Vorrichtungen zum Anschließen der Zitzenbecher im wesentlichen auf dem Trägerelement (3) angeordnet sind.

## Revendications

1. Structure pour la traite automatique d'animaux, ladite construction comprenant un box de traite (1) avec une trayeuse (2), qui est pourvue de gobelets trayeurs et de moyens pour connecter les gobelets trayeurs aux trayons d'un animal devant être trait, **caractérisée en ce que** les gobelets trayeurs sont disposés sur un élément formant support (3) qui peut se déplacer suivant trois dimensions au moyen d'au moins trois cylindres de commande (4), chacun d'eux ayant une extrémité connectée au box de traite (1).

2. Structure selon la revendication 1, **caractérisée en ce que** les au moins trois cylindres de commande (4) ne sont pas disposés dans un plan.

3. Structure selon la revendication 1 ou 2, **caractérisé en ce que** des moyens sont prévus pour une orientation spatiale de l'élément formant support (3).

4. Structure selon la revendication 3, **caractérisée en ce que** les moyens comprennent au moins un autre cylindre de commande (4) et/ou au moins un autre élément de commande, tel que par exemple un moteur pas à pas.

5. Structure selon l'une quelconque des revendications 1 à 4, **caractérisée en ce que** l'élément formant support (3) peut se déplacer suivant trois dimensions et peut être orienté au moyen de six cylindres de commande (4), chacun d'eux ayant une extrémité connectée au box de traite (1).

6. Structure selon la revendication 5, **caractérisée en ce que** l'élément formant support (3) possède essentiellement trois points de contact, non alignés les uns avec les autres, avec les cylindres de commande (4), chaque point de contact étant connecté à deux cylindres de commande (4).

7. Structure selon l'une quelconque des revendications 1 à 6, **caractérisée en ce que** chacun des cylindres de commande (4) est attaché au box de traite (1) au moyen d'une articulation sphérique.

8. Structure selon l'une quelconque des revendications 1 à 7, **caractérisée en ce que** les cylindres de commande (4) sont attachés soit seuls soit par paires à l'élément formant support (3) au moyen d'une articulation sphérique.

9. Structure selon l'une quelconque des revendications 1 à 8, **caractérisée en ce que** les cylindres de commande (4) sont appropriés pour déplacer l'élément formant support (3) de manière telle qu'il reste sensiblement parallèle au sol du box de traite (1).

10. Structure selon l'une quelconque des revendications 1 à 9, **caractérisé en ce qu'**une partie de l'élément formant support (3), sur laquelle sont disposés les gobelets trayeurs, est conçue de manière mobile par rapport à une autre partie de l'élément formant support (3), à laquelle sont attachés les cylindres de commande (4).

11. Structure selon la revendication 10, **caractérisé en ce que** l'élément formant support (3) est pourvu d'une plateforme pouvant tourner et/ou pouvant se déplacer et/ou pouvant pivoter pour les gobelets trayeurs.

12. Structure selon l'une quelconque des revendications 1 à 11, **caractérisé en ce que** l'élément formant support (3) est pourvu d'un dispositif de levage pour les gobelets trayeurs.

13. Structure selon l'une quelconque des revendications 1 à 12, **caractérisé en ce que** les moyens pour connecter les gobelets trayeurs sont essentiellement disposés sur l'élément formant support (3).
